(19) Europäisches Patentamt
European Patent Office
Office européen des brevets

(11) Veröffentlichungsnummer : **0 065 689**
**B1**

(12) # EUROPÄISCHE PATENTSCHRIFT

(45) Veröffentlichungstag der Patentschrift : **19.12.84**

(51) Int. Cl.$^3$ : **C 08 G 75/02**

(21) Anmeldenummer : **82104035.9**

(22) Anmeldetag : **10.05.82**

(54) **Verfahren zur Herstellung von Polyarylensulfiden.**

(30) Priorität : **22.05.81 DE 3120538**

(43) Veröffentlichungstag der Anmeldung : **01.12.82 Patentblatt 82/48**

(45) Bekanntmachung des Hinweises auf die Patenterteilung : **19.12.84 Patentblatt 84/51**

(84) Benannte Vertragsstaaten : **BE DE FR GB IT NL**

(56) Entgegenhaltungen :
**EP-A- 0 023 313**
**DE-A- 3 030 488**
**GB-A- 1 082 817**
**PATENTS ABSTRACTS OF JAPAN, Band 2, Nr. 76, 16 Juni 1978, Seite 946C78**

(73) Patentinhaber : **BAYER AG**
**Konzernverwaltung RP Patentabteilung**
**D-5090 Leverkusen 1 Bayerwerk (DE)**

(72) Erfinder : **Idel, Karsten, Dr.**
**Schelblerstrasse 81**
**D-4150 Krefeld (DE)**
Erfinder : **Freitag, Dieter, Dr.**
**Hasenheide 10**
**D-4150 Krefeld (DE)**
Erfinder : **Bottenbruch, Ludwig, Dr.**
**Woehlerstrasse 5**
**D-4150 Krefeld (DE)**
Erfinder : **Neuner, Otto, Dr.**
**Heiligenstock 77**
**D-5060 Bergisch Gladbach 2 (DE)**

**EP 0 065 689 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Polyarylensulfide sind bekannt (vgl. US-PS 2 538 941 und 2 513 188). Sie können aus den entsprechenden Halogenaromaten und Alkali- oder Erdalkalisulfiden hergestellt werden. Man kann in Masse arbeiten oder polare Lösungmittel mitverwenden. So werden nach dem in US-PS 3 354 129 beschriebenen Verfahren monomere und polymere Sulfide erhalten durch Umsetzung von mindestens einer cyclischen Verbindung, die eine Doppelbindung zwischen benachbarten Ringatomen enthält, und die wenigstens durch ein Halogenatom substituiert ist, mit einem Alkalisulfid in einem polaren Solvens wie Amid, Lactam oder Sulfon bei erhöhter Temperatur. Polyhalogenverbindungen können als Verzweiger eingesetzt werden.

In DE-AS 2 453 749 werden Carboxylate als Reaktionsbeschleuniger und neben Alkalisulfiden auch organische Thioverbindungen als Schwefelspender beansprucht.

Gemäß DE-OS 2 623 363 bzw. US-PS 4 038 261 werden als Katalysatoren für die Herstellung von Arylensulfidpolymeren Lithiumchlorid oder Lithiumcarboxylat eingesetzt.

N-Methylpyrrolidon und Alkalihydroxide vervollständigen das Katalysatorsystem.

Gemäß US-PS 4 038 259 werden Alkalicarbonate in Kombination mit Alkalicarboxylaten und gemäß US-PS 4 038 263 Lithiumhalogenide als Katalysatoren für die Polyphenylensulfidherstellung eingesetzt.

Gemäß DE-OS 2 623 362 bzw. US-PS 4 038 262 werden Lithiumhalogenide oder Alkalicarboxylate als Katalysatoren für die Herstellung von Arylensulfidpolymeren verwendet. N-Methylpyrrolidon und Alkalihydroxide vervollständigen das Katalysatorsystem.

Gemäß DE-OS 2 623 333 bzw. US-PS 4 064 114 wird Lithiumacetat als Katalysator für die Herstellung von Arylensulfidpolymeren verwendet. N-Alkylpyrrolidone und gegebenenfalls als Basen Alkalihydroxide und/oder Alkalicarbonate vervollständigen das Katalysatorsystem. In US-PS 4 038 260 werden Alkalimetallsulfonate und in US-PS 4 039 518 Lithiumcarbonat und Lithiumborat beansprucht.

Polyarylensulfide mit verringertem Schmelzfließverhalten können mit Trialkaliphosphat-Katalysatoren (DE-OS 2 930 710) oder Alkaliphosphonat-Katalysatoren (DE-OS 2 930 797) erhalten werden.

In DE-OS 2 623 333 wird die üblicherweise vor der Umsetzung mit Dihalogenaromaten in dem polaren Lösungsmittel durchgeführte Entwässerung in zwei Stufen vorgenommen. Zuerst wird das Hydrat des Katalysators Lithiumacetat entwässert und in einem zweiten Schritt anschließend das Natriumsulfidhydrat.

Im allgemeinen werden die p-Polyphenylensulfide noch einem an die Reaktion anschließenden Härtungs- oder Curingschritt unterworfen (z. B. US-PS 3 717 620, US-PS 3 524 835, US-PS 3 839 301), bei dem über Kettenverlängerungs- und Verzweigungsreaktionen die Eigenschaften verbessert werden sollen.

Ohne diesen Härtungsschritt besitzen die p-Polyphenylensulfide im allgemeinen eine nur niedrige Schmelzviskosität, die eine thermoplastische Verarbeitung nicht zuläßt.

Gemäß US-PS 3 919 177 soll unter ausgewählten Bedingungen mit Hilfe des Katalysators Lithiumcarboxylat erreicht werden, daß des erzeugte p-Polyphenylensulfid ohne vorherige Härtung zu Fasern schmelzversponnen werden kann. In der US-PS 4 116 947 bzw. DE-OS 2 817 731 soll durch eine besondere Menge Restwasser und gegebenenfalls in Anwesenheit von Carboxylaten erreicht werden, daß die resultierenden p-Polyphenylensulfide ohne Härtungsschritt zu Fasern versponnen und extrudiert, sowie formgepreßt werden können.

Der Erfindung liegt die Erkenntnis zugrunde, daß verzweigte Polyarylensulfide mit hoher Schmelzviskosität und hohem Molekulargewicht erhalten werden, wenn man in an sich bekannter Weise Polyhalogenbenzole und Alkalisulfide in Lactamen vorzugsweise N-Alkyllactamen als polare Lösungsmittel kondensiert und dabei zusätzlicher Anwesenheit von 0,02 bis 1,0 Mol. (bezogen auf 1 Mol. Alkalisulfid) eines N,N-Dialkylcarbonsäureamids arbeitet. Die erhaltenen Polyarylensulfide können ohne härtende Nachbehandlung formgepreßt, extrudiert und zu Fasern versponnen werden. Sie haben im Vergleich zu den bisher marktgängigen Polyarylensulfiden wesentlich verbesserte mechanische Eigenschaften, insbesondere eine sehr hohe Schlagzähigkeit. Das Verfahren hat gegenüber den Verfahren gemäß DE-OS 29 30 710 bzw. DE-OS 29 30 797 den Vorteil, daß ohne zusätzlichen Salzkatalysator gearbeitet wird.

Gegenstand der Erfindung ist ein Verfahren zur Herstellung von verzweigten, hochmolekularen Polyarylensulfiden mit Schmelzviskositäten von $0{,}5 \times 10^3$ bis $5 \times 10^5$ Pa . s, indem man

a) Dihalogenbenzole, von denen 50 bis 100 Mol.-% der Formel (I)

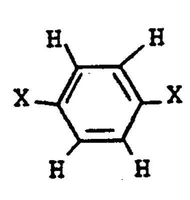

(I)

und 0 bis 50 Mol.-% der Formel (II)

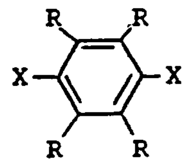

(II)

entsprechen, wobei

X Fluor, Chlor, Brom und Iod, vorzugsweise Chlor und Brom ist und

R gleich oder verschieden ist und Wasserstoff, $C_1$-$C_{20}$-Alkyl, $C_5$-$C_{20}$-Cycloalkyl, $C_6$-$C_{24}$-Aryl, $C_7$-$C_{24}$-Alkaryl oder $C_7$-$C_{24}$-Aralkyl sein kann, und/oder zwei Reste R zu einem aromatischen oder heterocyclischen Ring verknüpft sein können, und immer mindestens ein Rest R verschieden von Wasserstoff ist,

b) 0,1 bis 2,4 Mol.-%, bevorzugt 0,4 bis 2,0 Mol.-%, bezogen auf die Dihalogenbenzole, eines Polyhalogenaromaten der Formel (III)

$$ArX_n \qquad (III)$$

wobei

Ar ein aromatischer oder heterocyclischer Rest mit 6 bis 24 C-Atomen und mindestens 3 nicht von X besetzten Ringpositionen ist,

X die gleiche Bedeutung wie in Formel (I) und (II) hat und

n 3 oder 4 ist, und

c) ein Alkalisulfid, bevorzugt Natrium- oder Kaliumsulfid oder deren Mischung, bevorzugt in Form der Hydrate oder wäßriger Mischungen, gegebenenfalls zusammen mit Alkalihydroxiden in einem

d) Lactam einer Aminosäure mit 3 bis 5 C-Atomen, insbesondere einem N-Alkyllactam, ohne zusätzlichen Salzkatalysator

umsetzt,

wobei das molare Verhältnis von a) zu c) im Bereich von 0,85 : 1 bis 1,15 : 1, bevorzugt 0,95 : 1 bis 1,05 : 1 und von c) zu d) im Bereich von 1 : 2 bis 1 : 15 liegt, eine Polykondensationszeit von bis zu 10 Stunden, vorzugsweise von 0,2 bis 5 Stunden, und eine Polykondensationstemperatur von 160 bis 300 °C, bevorzugt zwischen 200 bis 285 °C, eingehalten wird, welches Verfahren dadurch gekennzeichnet ist, daß die Umsetzung in Anwesenheit von 2 bis 100 Mol.-%, bevorzugt 2 bis 50 Mol.-% (bezogen auf Alkalisulfid), N,N-Dialkylcarbonsäureamiden durchgeführt wird.

Geeignete N,N-Dialkylcarbonsäureamide sind solche der Formel IV

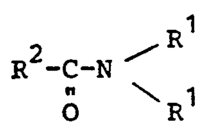

(IV)

worin $R^1$ gleich oder verschieden sein kann und ein $C_1$-$C_6$-Alkyl ist, und worin $R^2$ ein $C_1$-$C_{18}$-Alkyl oder ein $C_6$-$C_{12}$-Aryl ist.

Besonders geeignet sind N,N-Dimethyl- und N,N-Diethylcarbonsäureamide von $C_1$-$C_{18}$-aliphatischen und $C_{16}$-$C_{12}$-aromatischen Carbonsäuren, bevorzugt von $C_1$-$C_{18}$-aliphatischen Carbonsäuren und besonders bevorzugt von $C_1$-$C_4$-aliphatischen Carbonsäuren.

Im allgemeinen wird das als Hydrat vorliegende Alkalisulfid vor der vorzugsweise in Druckbehältern durchgeführten Umsetzung mit den p-Dihalogenverbindungen der Formel (I) und (II) und den Polyhalogenverbindungen der Formel (III) teilweise entwässert.

Das Alkalisulfid kann in einem Schritt oder mehreren Teilschritten, beispielsweise durch Abdestillieren des Wassers aus des Reaktionslösung, entwässert werden. Die Entwässerung soll vor der Zugabe der p-Dihalogenverbindungen der Formel (I) und (II) und der Polyhalogenverbindungen der Formel (III) abgeschlossen sein.

In einer bevorzugten Reaktionsführung wird Alkalisulfidhydrat entweder in dem N,N-Dialkylcarbonsäureamid oder einer Mischung des N,N-Dialkylcarbonsäureamides mit einem Lactam, ganz besonders bevorzugt einem N-Alkyllactam vorgelegt und die Entwässerung durchgeführt.

Es ist auch möglich, die Entwässerung in dem N-Alkyllactam durchzuführen und während oder nach der Entwässerung das N,N-Dialkylcarbonsäureamid zuzugeben.

Das N,N-Dialkylcarbonsäureamid wird vor der Abreaktion der Alkalisulfide mit den Verbindungen der Formel (I), (II) und (III) zugegeben.

Das Zusammengeben der Reaktanten kann im Prinzip in beliebiger Form erfolgen. Die p-Dihalogenaromaten der Formel (I) und (II) und die Polyhalogenaromaten der Formel (III) können zusammen oder getrennt, kontinuierlich, in Portionen oder direkt auf einmal zu dem Alkalisulfid, dem polaren Lösungsmittel oder einem Teil davon und dem N,N-Dialkylcarbonsäureamid gegeben werden. Es können aber auch das Alkalisulfid zusammen mit dem Lösungsmittel oder einem Teil davon und dem N,N-Dialkylsäure-

amid zu den Verbindungen der Formeln (I), (II) und (III) zudosiert werden. Es können auch alle Reaktanten direkt zusammengegeben werden. Jede andere Kombination der Reaktanten ist ebenfalls möglich.

Die Alkalisulfide, bevorzugt Kalium- und Natriumsulfid, werden vorzugsweise in Form ihrer Hydrate oder wäßrigen Mischungen eingesetzt. Sie können aber auch aus Schwefelwasserstoff und den entsprechenden Alkalihydroxiden oder aus den Alkalihydrogensulfiden und den entsprechenden Alkalihydroxiden gemäß einer stöchiometrischen Umsetzung in der Reaktionslösung direkt hergestellt werden. Es können auch Mischungen der Alkalisulfide eingesetzt werden.

Je nach Anteil von Alkalihydrogensulfid in der Reaktionslösung, das als Verunreinigung im Alkalisulfid enthalten ist oder während des Reaktionsprozesses entsteht, wird zusätzlich stöchiometrisch Alkalihydroxid zur Regenerierung von Alkalisulfid zudosiert. Gegebenenfalls können auch anstelle der Alkalihydroxide solche Verbindungen zugegeben werden, die unter den Reaktionsbedingungen Alkalihydroxide abspalten bzw. bilden.

Als Alkalisulfide werden z. B. Lithium-, Natrium-, Kalium- und Rubidiumsulfid, bevorzugt Natrium- und Kaliumsulfid, eingesetzt. Es können auch Mischungen der Alkalisulfide benutzt werden.

Als Alkalihydroxide kommen z. B. Lithiumhydroxid, Natriumhydroxid und Kaliumhydroxid sowie deren Mischungen in Frage.

Beispiele für die erfindungsgemäß einzusetzenden p-Dihalogenaromaten der Formel (I) sind : p-Difluorbenzol, p-Dichlorbenzol, p-Dibrombenzol, p-Dijodbenzol, 1-Fluor-4-chlorbenzol, 1-Fluor-4-brombenzol, 1-Chlor-4-brombenzol, 1-Chlor-4-jodbenzol und 1-Brom-4-jodbenzol. Sie sind allein oder im Gemisch miteinander verwendbar. Bevorzugt wird p-Dichlorbenzol oder p-Dibrombenzol eingesetzt.

Beispiele für die erfindungsgemäß einzusetzenden p-Dihalogenaromaten der Formel (II) sind : 2,5-Dichlortoluol, 2,5-Dichlorxylol, 1-Ethyl-2,5-dichlorbenzol, 1-Ethyl-2,5-dibrombenzol, 1-Ethyl-2-brom-5-chlorbenzol, 1,2,4,5-Tetramethyl-3,6-dichlorbenzol, 1-Cyclohexyl-2,5-dichlorbenzol, 1-Phenyl-2,5-dichlorbenzol, 1-Benzyl-2,5-dichlorbenzol, 1-Phenyl-2,5-dibrombenzol, 1-p-Tolyl-2,5-dichlorbenzol, 1-p-Tolyl-2,5-dibrombenzol, 1-Hexyl-2,5-dichlorbenzol. Sie sind allein oder im Gemisch miteinander einsetzbar.

Beispiele für die erfindungsgemäß einzusetzenden Polyhalogenaromaten der Formel (III) sind :

1,2,3-Trichlorbenzol, 1,2,4-Trichlorbenzol, 1,2,4-Tribrombenzol, 1,2,4-Trijodbenzol, 1,3,5-Trichlor-2,4,6-trimethylbenzol, 1,2,3-Trichlornaphthalin, 1,2,4-Trichlornaphthalin, 1,2,6-Trichlornaphthalin, 2,3,4-Trichlortoluol, 2,4,6-Trichlortoluol, 1,2,3,4-Tetrachlornaphthalin, 1,2,4,5-Tetrachlorbenzol, 2,2',4,4'-Tetrachlorbiphenyl, 1,3,5-Trichlor-triazin.

Lactame im Sinne der vorliegenden Erfindung sind solche von Aminosäuren mit 3 bis 5 C-Atomen, die gegebenenfalls Substituenten am Kohlenstoffgerüst tragen können, die unter Reaktionsbedingungen inert sind, wie z. B. einen Alkylrest mit 1 bis 5 C-Atomen.

N-Alkyllactame im Sinne der vorliegenden Erfindung sind wie die erfindungsgemäß verwendbaren Lactame definiert, tragen jedoch zusätzlich am Stickstoffatom einen Alkylrest mit 1 bis 6 C-Atomen.

Beispielsweise kommen als Lösungsmittel in Frage :

Caprolactam, N-Methylcaprolactam, N-Ethylcaprolactam, N-Isopropylcaprolactam, N-Isobutylcaprolactam, N-Propylcaprolactam, N-Butylcaprolactam, N-Cyclohexylcaprolactam, N-Methyl-2-pyrrolidon, N-Ethyl-2-pyrrolidon, N-Isopropyl-2-pyrrolidon, N-Isobutyl-2-pyrrolidon, N-Propyl-2-pyrrolidon, N-Butyl-2-pyrrolidon, N-Cyclohexyl-2-pyrrolidon, N-Methyl-3-methyl-2-pyrrolidon, N-Cyclohexyl-2-pyrrolidon, N-Methyl-3-methyl-2-pyrrolidon, N-Methyl-3,4,5-trimethyl-2-pyrrolidon, N-Methyl-2-piperidon, N-Ethyl-2-piperidon, N-Isopropyl-2-piperidon, N-Isobutyl-2-piperidon, N-Methyl-6-methyl-2-piperidon, N-Methyl-3-ethyl-2-piperidon, N-Methyl-2-oxo-hexamethylenimin, N-Ethyl-2-oxo-hexamethylenimin.

Es können auch Mischungen der vorstehenden Lösungsmittel gewählt werden.

Als N,N-Dialkylcarbonsäureamide kommen z. B. in Frage :

N,N-Dimethylacetamid ; N,N-Diethylacetamid ; N,N-Dipropylacetamid ; N,N-Diisopropylacetamid ; N-Methyl-N-ethylacetamid ; N,N-Dimethylpropionsäureamid ; N,N-Diethylpropionsäureamid ; N,N-Dimethylisopropionsäureamid, N,N-Dimethylbenzoesäureamid, N,N-Diethylbenzoesäureamid, N,N-Dimethylstearinsäureamid.

Die Kondensationstemperatur ist in der Regel 160 bis 300 °C, bevorzugt 200 bis 285 °C. Die Reaktionszeit kann bis zu 10 Stunden betragen, liegt jedoch vorzugsweise zwischen 0,2 und 5 Stunden. Eine stufenweise Steigerung der Reaktionstemperatur während dieser Zeit ist von Vorteil. Da die Reaktionstemperatur im allgemeinen höher liegt als der Siedepunkt des Lösungsmittelgemisches, wird automatisch unter Anwendung von Überdruck gearbeitet.

Das Dihalogenbenzol und das Alkalisulfid werden möglichst äquimolar umgesetzt. Das Molverhältnis Dihalogenbenzol/Alkalisulfid liegt demgemäß bevorzugt im Bereich von 0,95 : 1 bis 1,05 : 1. Es kann jedoch auf den Bereich 0,85 : 1 bis 1,15 : 1 erweitert werden.

Die erfindungsgemäß einzusetzenden Polyhalogenaromaten der Formel (III) können je nach den Versuchsbedingungen zusammen mit den p-Di-halogenbenzolen oder getrennt zugesetzt werden.

Die Menge Lactam kann in einem weiten Bereich gewählt werden, liegt im allgemeinen jedoch bei 2 bis 15 Mol pro Mol Alkalisulfid.

Die Aufarbeitung des Reaktionsgemisches kann in mannigfaltiger Weise erfolgen.

Das Polyarylensulfid kann direkt aus der Reaktionslösung oder erst nach Zugabe, z. B. von Wasser und/oder verdünnten Säuren, nach üblichen Verfahrensweisen abgetrennt werden, beispielsweise durch Filtration oder durch Zentrifugieren.

Nach der Filtration schließt sich im allgemeinen zur Entfernung von anorganischen Bestandteilen, die den Polymeren anhaften können, wie z. B. Reste Alkalisulfide und Alkalichloride, eine Wäsche mit Wasser an.

Eine Wäsche oder Extraktion mit anderen Waschflüssigkeiten, die auch zusätzlich oder nachträglich zu dieser Wäsche durchgeführt werden kann, ist natürlich auch möglich.

Das Polymere kann auch durch Abziehen des Lösungsmittels aus dem Reaktionsraum und eine anschließende Wäsche, wie oben beschrieben, gewonnen werden.

Die erfindungsgemäß hergestellten Polyarylensulfide können auch mit anderen Polymeren, mit Pigmenten und Füllstoffen, wie beispielsweise Graphit, Metallpulver, Glaspulver, Quarzmehl oder Glasfasern gemischt oder mit den für Polyarylensulfide üblichen Additiven, wie beispielsweise üblichen Stabilisatoren oder Entformungsmitteln, versetzt werden.

Im allgemeinen wird das Schmelzfließverhalten von Polyarylensulfiden nach ASTM 1238-70 bei 316 °C unter Verwendung eines 5-kg-Gewichtes gemessen und in g/10 min angegeben.

Bei hohen Schmelzflußwerten kann diese Messung jedoch aufgrund der hohen Ausflußrate der Polymerschmelze Schwierigkeiten bereiten.

Es wurde deshalb die Schmelzviskosität $\eta_m$ der Polymerschmelze (in Pa · s) bei 306 °C in Abhängigkeit von der Schubspannung $\tau$ (in Pa) mit Hilfe des Instron-Rotationsviskosimeters bestimmt.

Man kann auf diese Weise die Schmelzviskosität in einem sehr weiten Bereich $10^{-1}$ bis $10^7$ Pa · s genau bestimmen. In dem Instron-Rheometer wird das Polymer zwischen einer festen Platte und einem drehbaren Kegel aufgeschmolzen und das Drehmoment des Kegels bestimmt. Aus dem Drehmoment, der Winkelgeschwindigkeit und den apparativen Daten kann die Schmelzviskosität in Abhängigkeit von der Schubspannung errechnet werden. Verwendet wurde das Rheometer Modell 3250 der Fa. Instron ; Durchmesser des Kegels und der Platte 2 cm.

Angegeben wird die Schmelzviskosität, die bei einer Schubspannung von $\tau = 10^2$ Pa gemessen wird.

Die erfindungsgemäß hergestellten p-Polyarylensulfide besitzen direkt nach der Isolierung aus dem Reaktionsgemisch im allgemeinen Schmelzviskositäten von $0{,}5 \times 10^3$ bis $5 \times 10^5$ Pa · s, vorzugsweise aber von $1{,}5 \times 10^3$ bis $5 \times 10^4$ Pa · s. Sie können direkt durch Extrusion, Extrusionsblasen, Spritzgießen oder sonst übliche Verarbeitungstechniken zu Folien, Formkörpern oder Fasern verarbeitet werden, welche in üblicher Weise Verwendung finden als Automobilteile, Armaturen, Elektroteile, z. B. Schalter, elektronische Tafeln, chemikalienresistente Teile und Apparate wie Pumpengehäuse und Pumpenflügelräder, Ätzbadschalen, Dichtungsringe, Teile von Büromaschinen und Fernmeldeeinrichtungen, sowie Haushaltsgeräte, Ventile, Kugellagerteile etc.

## Beispiel 1

Dieses Beispiel beschreibt zum Vergleich die Herstellung von Polyphenylensulfid gemäß US-PS 3 354 129.

In einem mit Rührer ausgerüsteten Autoklaven wurden 129 g Natriumsulfid-tri-hydrat (entsprechend 1 Mol $Na_2S$) und 300 g N-Methyl-2-pyrrolidon zusammengegeben. Das Gemisch wurde mit Stickstoff gespült und langsam bis auf 202 °C erwärmt. Dabei destillierten insgesamt 19 ml Wasser ab. Der Ansatz wurde anschließend auf ca. 160 °C heruntergekühlt und 147 g p-Dichlorbenzol (= 1 Mol.) in ca. 50 g N-Methyl-2-pyrrolidon hinzugefügt. Man erwärmt das Reaktionsgemisch unter dem Stickstoffvordruck von 2,5 bar in 30 Minuten auf 245 °C, wobei der Druck auf 10 bar ansteigt, und hält diese Temperatur 3 Stunden. Nach Abkühlen auf Raumtemperatur wird ein grauer Feststoff isoliert, der anschließend einer sorgfältigen Wasserwäsche zur Entfernung der anorganischen Beimengen unterworfen wird.

Man trocknet bei 80 °C im Vakuum und erhält 100,3 g (93 %) Poly-p-phenylensulfid mit folgenden Kenndaten :

Schmelzviskosität $\eta m = 4{,}5$ Pa · s (bei $\tau = 10^2$ Pa). Eine thermoplastische Verarbeitung ist ohne Härtung nicht möglich.

## Beispiel 2

In einem mit Rührer und Destillationsaufsatz ausgerüsteten Autoklaven werden 13,06 g Dimethylacetamid (0,15 Mol), 129 g Natriumsulfid-tri-hydrat (= 1,0 Mol $Na_2S$) und 300 g N-Methyl-2-pyrrolidon langsam bis auf 175 °C aufgeheizt, wobei 8 ml Destillat aufgefangen werden, das größtenteils aus Wasser besteht.

Danach wird zur Neutralisation von Natriumhydrogensulfid eine entsprechende, stöchiometrische Menge von Natriumhydroxid als feingemahlenes Pulver zugeführt und der Ansatz noch kurze Zeit bei 175 °C belassen.

Anschließend werden 142,6 g p-Dichlorbenzol (0,97 Mol) und 1,4 g 1,2,4-Trichlorbenzol (0,08 Mol) in 150 g N-Methyl-2-pyrrolidon zudosiert und der Ansatz in 90 Minuten von 200 °C auf 269 °C hochgeheizt

und 120 Minuten bei dieser Temperatur belassen. Nach Reaktionsende läßt man auf 150 °C abkühlen, entspannt und entnimmt das Reaktionsgemisch. Das entstandene p-Polyphenylensulfid wird abgetrennt und sorgfältig mit Wasser von anhaftenden Salzen befreit. Das p-Polyphenylensulfid wird nach Trocknen als grau-weißer Feststoff isoliert. Schmelzviskosität $\eta m = 2\,650$ Pa · s (bei $\tau = 10^2$ Pa).

Beispiel 3

Dieses Beispiel wurde wie Beispiel 2 ausgeführt, aber 0,25 Mol Dimethylacetamid, eingesetzt :

$$\eta m = 3\,150 \text{ Pa} \cdot \text{s (bei } \tau = 10^2 \text{ Pa).}$$

Beispiel 4

Wie Beispiel 2, aber mit 0,15 Mol Diethylacetamid anstelle von Dimethylacetamid :

$$\eta m = 2\,800 \text{ Pa} \cdot \text{s (bei } \tau = 10^2 \text{ Pa).}$$

Beispiel 6

774,0 g Natriumsulfid-tri-hydrat (6,0 Mol $Na_2S$) und 800 g N-Methyl-2-pyrrolidon werden bei 130 °C vorgelegt und 78,4 g Dimethylacetamid (0,9 Mol) langsam zugegeben. Anschließend wird bis auf 160 °C hochgeheizt und 120 ml Destillat aufgefangen, das größtenteils aus Wasser besteht. Nachdem entsprechend der vorliegenden Menge Natriumhydrogensulfid Natriumhydroxid nachdosiert worden ist, werden 855,6 g (5,82 Mol) p-Dichlorbenzol und 10,56 g 1,2,4-Trichlorbenzol (0,058 Mol) in 1 600 g N-Methyl-2-pyrrolidon zugegeben und der Ansatz auf 200 °C aufgeheizt, in 90′ auf 268 °C gebracht und 150′ dabei gehalten. Das resultierende grau-weiße p-Polyphenylensulfid wird wie in Beispiel 2 isoliert und aufgearbeitet.

$$\eta m = 4\,200 \text{ Pa} \cdot \text{s (bei } \tau = 10^2 \text{ Pa).}$$

Beispiel 7

Wie Beispiel 6, jedoch mit 0,20 Mol Dimethylacetamid und 0,08 Mol 1,2,4-Trichlorbenzol pro Mol $Na_2S$.

$$\eta m = 3\,850 \text{ Pa} \cdot \text{s (bei } \tau = 10^2 \text{ Pa).}$$

Beispiel 8

Wie Beispiel 6, jedoch wird ein Gemisch von 66,6 Gew.-% N-Isopropyl-2-pyrrolidon und 33,4 Gew.-% N-Methyl-2-pyrrolidon anstelle von reinem N-Methyl-2-pyrrolidon eingesetzt.

$$\eta m = 1\,870 \text{ Pa} \cdot \text{s (bei } \tau = 10^2 \text{ Pa).}$$

Beispiel 9

Wie Beispiel 6, jedoch werden 0,12 Mol. 1,2,4-Trichlorbenzol pro Mol. $Na_2S$ eingesetzt.

$$\eta m = 6\,700 \text{ Pa} \cdot \text{s (bei } \tau = 10^2 \text{ Pa).}$$

Die mechanischen Eigenschaften des p-Polyphenylensulfids der Beispiele 6 und 7 wurden bestimmt und mit denen eines handelsüblichen, thermoplastisch verarbeitbaren p-Polyphenylensulfids (Ryton P4 der Phillips Petroleum Comp.) verglichen. Das Ergebnis zeigt die folgende Tabelle 1.

(Siehe Tabelle 1 Seite 7 f.)

Tabelle 1

| Eigenschaft | Maßeinheit | Prüfvorschrift | p-Polyphenylensulfid Handelsprodukt | gemäß Beispiel 6 | gemäß Beispiel 7 |
|---|---|---|---|---|---|
| Reißfestigkeit | MPa | DIN 53 455 | 43,6 | 45,1 | 42,3 |
| Reißdehnung | % | DIN 53 455 | 0,9 | 10,1 | 10,6 |
| Zug-E-Modul | MPa | DIN 53 455 | 4400 | 3400 | 3240 |
| Biegefestigkeit | MPa | DIN 53 452 | 77,8 | 116,0 | 123,0 |
| Biege-E-Modul | MPa | DIN 53 452 | 3820 | 3730 | 4170 |
| Kugeldruckhärte | MPa | DIN 53 456 | 64,7 | 144,4 | 154,0 |
| Schlagzähigkeit | $kJ/m^2$ | DIN 53 453 | 3,5 | 26,3 | 26,6 ! |
| Kerbschlagzähigkeit | $kJ/m^2$ | DIN 53 453 | 0,9 | 1,3 | 1,2 |
| Schmelzviskosität (bei $\tau = 10^2$ Pa) | Pa.s | | 4100 | 4200 | 3850 |

Bei der Reißdehnung, der Kugeldruckhärte und insbesondere der Schlagzähigkeit zeigt sich das deutlich verbesserte Niveau der erfindungsgemäßen p-Polyphenylensulfide im Vergleich zu dem handelsüblichen, thermoplastischen p-Polyphenylensulfid.

## Ansprüche

1. Verfahren zur Herstellung von hochmolekularen verzweigten Polyarylensulfiden mit Schmelzviskositäten von $0{,}5 \times 10^3$ bis $5 \times 10^5$ Pa · s, indem man

a) Dihalogenbenzole, von denen 50 bis 100 Mol.-% der Formel I

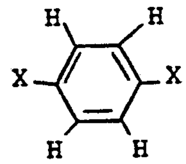

(I)

und 0 bis 50 Mol.-% der Formel II

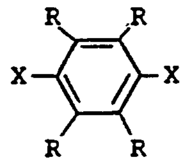

(II)

entsprechen, wobei

X Fluor, Chlor, Brom oder Iod und

R gleich oder verschieden ist und Wasserstoff, $C_1$-$C_{20}$-Alkyl, $C_5$-$C_{20}$-Cycloalkyl, $C_6$-$C_{24}$-Aryl, $C_7$-$C_{24}$-Alkaryl oder $C_7$-$C_{24}$-Aralkyl sein kann, und/oder zwei Reste R zu einem aromatischen oder heterocyclischen Ring verknüpft sein können, und immer mindestens ein Rest R verschieden von Wasserstoff ist,

b) 0,1 bis 2,4 Mol.-%, bezogen auf die Dihalogenbenzole eines Polyhalogenaromaten der Formel III

$$Ar\ X_n \qquad (III)$$

wobei

Ar ein aromatischer oder heterocyclischer Rest mit 6 bis 24 C-Atomen und mindestens 3 nicht von X besetzten Ringpositionen ist,

X die gleiche Bedeutung wie in Formel I und II hat und

$n = 3$ oder 4 ist, und

c) ein Alkalisulfid

in einem

d) Lactam einer Aminosäure mit 3 bis 5 C-Atomen ohne zusätzlichen Salzkatalysator

umsetzt, wobei das molare Verhältnis von a) zu c) im Bereich von 0,85 : 1 bis 1,15 : 1 und c) zu d) im Bereich 1 : 2 bis 1 : 15 liegt, eine Polykondensationszeit von bis zu 10 Stunden und eine Polykondensationstemperatur von 160 bis 300 °C eingehalten wird, dadurch gekennzeichnet, daß die Umsetzung in Anwesenheit von 2-100 Mol.-% (bezogen auf Alkalisulfid) N,N-Dialkylcarbonsäureamiden durchgeführt wird.

2. Verfahren gemäß Anspruch 1, dadurch gekennzeichnet, daß 2 bis 50 Mol.-%, bezogen auf Alkalisulfid, N,N-Dialkylcarbonsäureamid eingesetzt werden.

3. Verfahren gemäß Ansprüche 1 und 2, dadurch gekennzeichnet, daß als Komponente d) ein N-Alkyllactam verwendet wird.

## Claims

1. Process for the preparation of high molecular weight branched polyarylene sulphides having melt viscosities of $0.5 \times 10^3$ to $5 \times 10^5$ Pa · s, by reacting

a) dihalogenobenzenes, of which 50 to 100 mol.-% correspond to the formula I

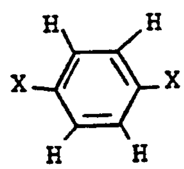

(I)

and 0 to 50 mol.-% to the formula II,

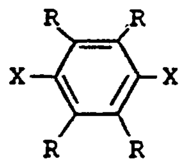

(II)

wherein

X is fluorine, chlorine, bromine or iodine and

R is identical or different and can be hydrogen, $C_1$-$C_{20}$-alkyl, $C_5$-$C_{20}$-cycloalkyl, $C_6$-$C_{24}$-aryl, $C_7$-$C_{24}$-alkaryl or $C_7$-$C_{24}$-aralkyl, and/or two radicals R can be linked to give an aromatic or heterocyclic ring, and at least one radical R is always different from hydrogen,

b) 0.1 to 2.4 mol.-%, relative to the dihalogenobenzenes, of a polyhalogenoaromatic of the formula III

$$Ar\ X_n \qquad (III)$$

wherein

Ar is an aromatic or heterocyclic radical having 6 to 24 C atoms and at least 3 ring positions not occupied by X,

X has the same meaning as in formula I and II and

n = 3 or 4, and

c) an alkali metal sulphide

in a

d) lactam of an amino acid with 3 to 5 C atoms,

without any additional salt catalyst, the molar ratio of a) to c) being in the range of 0.85 : 1 to 1.15 : 1 and of c) to d) in the range of 1 : 2 to 1 : 15, and adhering to a polycondensation time of up to 10 hours and a polycondensation temperature of 160 to 300 °C, characterised in that the reaction is carried out in the presence of 2-100 mol.-% (relative to alkali metal sulphide) of N,N-dialkylcarboxamides.

2. Process according to Claim 1, characterised in that 2 to 50 mol.-%, relative to alkali metal sulphide, of N,N-dialkylcarboxamide are used.

3. Process according to Claims 1 and 2, characterised in that an N-alkyl lactam is used as component d).

**Revendications**

1. Procédé de préparation de sulfures de polyarylène ramifiés et de poids moléculaire élevé ayant des viscosités en masse fondue de 0,5 × $10^3$ à 5 × $10^5$ Pa · s, en faisant réagir

a) des dihalogénobenzènes dont 50 à 100 % molaires répondent à la formule I

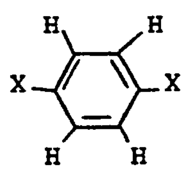

(I)

et dont 0 à 50 % molaires répondent à la formule (II)

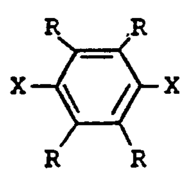

(II)

où

X représente un atome de fluor, un atome de chlore, un atome de brome ou un atome d'iode, et

les radicaux R sont identiques ou différents et peuvent être chacun un atome d'hydrogène, un groupe alkyle en $C_1$-$C_{20}$, un groupe cycloalkyle en $C_5$-$C_{20}$, un groupe aryle en $C_6$-$C_{24}$, un groupe alcaryle en $C_7$-$C_{24}$ ou un groupe aralkyle en $C_7$-$C_{24}$ et/ou deux radicaux R peuvent être reliés à un noyau aromatique ou hétérocyclique, tandis qu'au moins un radical R est toujours différent de l'hydrogène,

b) 0,1 à 2,4 % molaires (calculé sur les dihalogénobenzènes) d'un hydrocarbure aromatique polyhalogéné de formule III

$$Ar\ X_n \qquad (III)$$

où

Ar représente un radical aromatique ou hétérocyclique contenant 6 à 24 atomes de carbone et ocupant au moins trois positions du noyau non occupées par X,

X a la même signification que celle définie dans les formules I et II et

n = 3 ou 4, et

c) un sulfure alcalin

dans

d) un lactame d'un amino-acide contenant 3 à 5 atomes de carbone sans catalyseur salin supplémentaire,

le rapport molaire entre a) et c) se situant dans l'intervalle de 0,85 : 1 à 1,15 : 1 et le rapport molaire entre c) et d) se situant dans l'intervalle de 1 : 2 à 1 : 15, tout en maintenant un temps de polycondensation allant jusqu'à 10 heures et une température de polycondensation de 160 à 300 °C, caractérisé en ce qu'on effectue la réaction en présence de 2-100 % molaires (calculé sur le sulfure alcalin) de N,N-dialkylamides d'acides carboxyliques.

2. Procédé suivant la revendication 1, caractérisé en ce qu'on utilise 2 à 50 % molaires (calculé sur le sulfure alcalin) d'un N,N-dialkylamide d'acide carboxylique.

3. Procédé suivant les revendications 1 et 2, caractérisé en ce que, comme composant d), on utilise un N-alkyl-lactame.